# EUROPEAN PATENT APPLICATION

(11) **EP 3 217 474 A1**
(43) Date of publication of application: **13.09.2017**
(21) Application number: 17159549.9
(22) Date of filing: 07.03.2017
(51) Int. Cl.: H01Q 1/24, H01Q 21/00, H01Q 21/06, H01Q 5/40, H01Q 5/42

(54) **MULTI-FREQUENCY ARRAY ANTENNA AND COMMUNICATIONS SYSTEM**

(30) Priority: 07.03.2016 CN 201610128209
(71) Applicant: HUAWEI TECHNOLOGIES CO., LTD., Shenzhen Guangdong 518129 (CN)
(72) Inventor: DING, Feng, Shenzhen, Guangdong 518129 (CN); ZHANG, Kun, Shenzhen, Guangdong 518129 (CN)
(74) Representative: Thun, Clemens

(57) **Abstract**

The present invention relates to the field of antenna technologies, and discloses a multi-frequency array antenna and a communications system. The multi-frequency array antenna includes a reflective plate and at least two microstrip antennas having different operating frequency bands, where each of the at least two microstrip antennas includes a respective feed network and a respective radiating element set, the at least two microstrip antennas include a first microstrip antenna and a second microstrip antenna, and there is an overlapping region between a graph constituted on the reflective plate by a plurality of radiating elements in a first radiating element set of the first microstrip antenna and a graph constituted on the reflective plate by at least one radiating element in a second radiating element set of the second microstrip antenna. In the present invention, the graph constituted on the reflective plate by the radiating elements in the first radiating element set is made to overlap the graph constituted on the reflective plate by the radiating element in the second radiating element set. This resolves a problem that a size of a multi-frequency array antenna is large in a related technology, reducing the size of the multi-frequency array antenna.

## Description

### TECHNICAL FIELD

The present invention relates to the field of antenna technologies, and in particular, to a multi-frequency array antenna and a communications system.

### BACKGROUND

An array antenna is an antenna that includes a plurality of radiating elements arranged according to a specific pattern. A multi-frequency array antenna is an antenna set that includes a plurality of array antennas that support different operating frequency bands.
A conventional multi-frequency array antenna includes a plurality of array antennas. Therefore, a size of the multi-frequency array antenna is large.

### SUMMARY

To resolve a problem that a size of a conventional multi-frequency array antenna is large, this application provides a multi-frequency array antenna and a communications system. The technical solutions are as follows:
According to a first aspect, a multi-frequency array antenna is provided. The multi-frequency array antenna includes a reflective plate and at least two microstrip antennas having different operating frequency bands. Each of the at least two microstrip antennas includes a respective feed network and a respective radiating element set. The at least two microstrip antennas may include a first microstrip antenna and a second microstrip antenna. A first radiating element set of the first microstrip antenna includes a plurality of radiating elements arranged in an array, and a second radiating element set of the second microstrip antenna includes at least one radiating element. The first radiating element set and the second radiating element set are located on a same side of the reflective plate. There is an overlapping region between a graph constituted on the reflective plate by the plurality of radiating elements in the first radiating element set and a graph constituted on the reflective plate by the at least one radiating element in the second radiating element set.

The reflective plate is a conductor ground plate. The reflective plate is configured to cooperate with the radiating elements to generate an electromagnetic wave. A graph constituted on the reflective plate by a plurality of radiating elements may refer to a graph surrounded by or formed by connecting disposition positions of the plurality of radiating elements on the reflective plate.

A size of the multi-frequency array antenna is generally determined by a size of the reflective plate, and the size of the reflective plate is determined by a size of a region occupied on the reflective plate by all radiating elements in the multi-frequency array antenna. Therefore, the overlapping region existing between the graph constituted on the reflective plate by the plurality of radiating elements in the first radiating element set and the graph constituted on the reflective plate by the radiating element in the second radiating element set can reduce the size of the multi-frequency array antenna.

In optional implementation, the multi-frequency array antenna may further include a dielectric substrate. The dielectric substrate is configured to form an open circuit between a radiating element and the reflective plate. A microstrip antenna may form an electromagnetic wave on the open circuit between the radiating element and the reflective plate. The dielectric substrate may be an air substrate, or a substrate with a dielectric constant greater than 1.

For example, in the multi-frequency array antenna, an operating frequency band of the first microstrip antenna may be a 2.4 gigahertz (English: gigahertz; symbol: GHz) frequency band, and an operating frequency band of the second microstrip antenna may be a 5 GHz frequency band. The 2.4 GHz frequency band and the 5 GHz frequency band are two commonly used operating frequency bands.

In optional implementation, the multi-frequency array antenna further includes the dielectric substrate. The dielectric substrate is disposed between the radiating element set of each microstrip antenna of the at least two microstrip antennas and the reflective plate, and the dielectric constant of the dielectric substrate is greater than 1. For example, the dielectric constant of the dielectric substrate may be greater than or equal to 2.8, or further, may be greater than or equal to 4.2. Sizes of the radiating elements in the first radiating element set are equal and less than a preset radiating element size of the first microstrip antenna. The preset radiating element size is a radiating element size obtained by means of calculation by using a parameter that is the dielectric constant of the dielectric substrate being 1.

In this application, there is an overlapping region between the graph constituted on the reflective plate by the plurality of radiating elements in the first radiating element set and the graph constituted on the reflective plate by the radiating element in the second radiating element set. Therefore, a size of space between the radiating elements in the first radiating element set may be insufficient to dispose the radiating element in the second radiating element set. One solution is reducing a size of a radiating element in the first radiating element set.

A relationship between a size of a radiating element of a microstrip antenna and the dielectric constant of the dielectric substrate is a negative correlation. Therefore, increasing the dielectric constant of the dielectric substrate and reducing the size of the radiating element can increase a gap between radiating elements of the first microstrip antenna when performance of the first microstrip antenna is maintained, so that the radiating element of the second microstrip antenna can be disposed between the radiating elements of the first microstrip antenna. The gap between the radiating elements refers to a minimum distance between two radiating elements.

In optional implementation, the first radiating element set includes four radiating elements, a graph constituted on the reflective plate by the four radiating elements in the first radiating element set is a first square, a shape of each radiating element in the first radiating element set is a square, a size of the radiating element is a side length of the square, and it is obtained by means of calculation that a preset radiating element size is 56 millimeters (English: millimeter; symbol: mm) when the dielectric constant of the dielectric substrate is 1. In this implementation, the dielectric constant of the dielectric substrate is greater than 1, and a size of each radiating element in the first radiating element set is less than 56 millimeters. Therefore, the gap between the radiating elements in the first radiating element set can be increased.

If the dielectric constant of the dielectric substrate is far greater than 1, for example, greater than or equal to 2.8 or further greater than or equal to 4.2, the size of the radiating element in the first radiating element set may be further reduced, to increase a gap between a radiating element in the first radiating element set and a radiating element in the second radiating element set. An increase in the gap between the radiating elements can reduce electromagnetic interference between the radiating elements.

In optional implementation, the graph constituted on the reflective plate by the plurality of radiating elements in the first radiating element set is a regular polygon, a distance between any two neighboring radiating elements in the first radiating element set is greater than a preset arrangement distance, and the preset arrangement distance is obtained by means of calculation according to a wavelength of the operating frequency band of the first microstrip antenna. This implementation is another method for resolving the problem that a size of space between the radiating elements of the first microstrip antenna is insufficient to dispose the radiating element of the second microstrip antenna. A distance between two neighboring radiating elements may refer to a distance between disposition positions of the two neighboring radiating elements on the reflective plate. The disposition positions may be positions of orthographic projections of centers of the radiating elements on the reflective plate.

In optional implementation, the first radiating element set includes four radiating elements, a graph constituted on the reflective plate by the four radiating elements in the first radiating element set is a first square, the preset arrangement distance may be 0.9λ, and λ is the wavelength of the operating frequency band of the first microstrip antenna. For example, if λ is equal to 120 mm, the preset arrangement distance is 108 mm. In this implementation, the distance between any two neighboring radiating elements in the first radiating element set is greater than 108 mm.

In optional implementation, the second radiating element set includes n radiating elements, and n is an integer greater than 0.

If the wavelength of the operating frequency band of the first microstrip antenna is greater than a wavelength of the operating frequency band of the second microstrip antenna, a graph constituted on the reflective plate by the n radiating elements is within the graph constituted on the reflective plate by the plurality of radiating elements in the first radiating element set. That is, the graph constituted on the reflective plate by the n radiating elements falls completely within the graph constituted on the reflective plate by the plurality of radiating elements, without exceeding the graph constituted on the reflective plate by the plurality of radiating elements in the first radiating element set. For example, the graph constituted on the reflective plate by the n radiating elements in the second radiating element set is referred to as a first graph, and the graph constituted on the reflective plate by the plurality of radiating elements in the first radiating element set is referred to as a second graph. If the first graph is a point and the second graph is a line segment, the point is on the line segment. If the first graph is a square and the second graph is also a square, the first graph is within a region occupied by the second graph.

If the first radiating element set includes four radiating elements, and a graph constituted on the reflective plate by the four radiating elements in the first radiating element set is a first square, n may be less than 6. That is, a quantity of radiating elements in the second radiating element set may be 1, 2, 3, 4, or 5. In optional implementation, the graph constituted on the reflective plate by the four radiating elements in the first radiating element set is the first square, the second radiating element set includes four radiating elements, and a graph constituted on the reflective plate by the four radiating elements in the second radiating element set is a second square. A center of the first square and a center of the second square may be a same point, a diagonal line of the second square is perpendicular to a side of the first square, and the second square is within the first square. Nesting the radiating elements of the two microstrip antennas together in such an arrangement manner can reduce the size of the entire multi-frequency array antenna to a large extent. In a conventional multi-frequency array antenna, generally, radiating elements of two microstrip antennas are independently arranged. As a result, a large region is occupied, and accordingly, a size of the multi-frequency array antenna is large.

In optional implementation, a first feed network of the first microstrip antenna and a second feed network of the second microstrip antenna are located on different sides of the reflective plate. That is, a feed network and a radiating element of one microstrip antenna of the first microstrip antenna and the second microstrip antenna are disposed on a same side of the reflective plate, and a feed network and a radiating element of the other one are separately disposed on two sides of the reflective plate. In this application, there is an overlapping region between the graph constituted on the reflective plate by the radiating elements in the first radiating element set and the graph constituted on the reflective plate by the radiating element in the second radiating element set. Therefore, the radiating elements in the first radiating element set may be relatively close to the radiating element in the second radiating element set. As a result, the first feed network of the first microstrip antenna may be excessively close to the second feed network of the second microstrip antenna. If the first feed network and the second feed network are located on a same side of the reflective plate, the first feed network and the second feed network may electromagnetically interfere with each other. In this implementation, the first feed network and the second feed network are disposed on different sides of the reflective plate, and the two feed networks are separated by the reflective plate. This reduces interference between the two feed networks.

In optional implementation, in the first microstrip antenna or the second microstrip antenna, a radiating element set that is not located on a same side of the reflective plate as a feed network is connected to the feed network by using a feed pin. Each radiating element in the radiating element set may be separately connected to the feed network by using one feed pin. The feed pin is a metal conductive bar with an insulation housing in a preset position.

In addition, in the first microstrip antenna or the second microstrip antenna, a radiating element set that is located on a same side of the reflective plate as a feed network may be directly connected to the corresponding feed network.

According to a second aspect, a communications system is provided. The communications system includes:
a base station (English: base station, BS for short), and the multi-frequency array antenna according to the first aspect or any implementation of the first aspect. The base station receives a signal or sends a signal by using the multi-frequency array antenna. The foregoing base station refers to a radio transceiver, for example, a cell site (English: cell site) in a cellular network, or a wireless access point (English: wireless access point, WAP for short) in a wireless local area network (English: wireless local area network, WLAN for short).

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a conventional multi-frequency array antenna;
FIG. 2 is a schematic structural diagram of a multi-frequency array antenna according to an embodiment of the present invention;
FIG. 3 is a schematic structural diagram of another multi-frequency array antenna according to an embodiment of the present invention;
FIG. 4 is a schematic structural diagram of another multi-frequency array antenna according to an embodiment of the present invention;
FIG. 5 is a schematic structural diagram of another multi-frequency array antenna according to an embodiment of the present invention;
FIG. 6 is a schematic diagram of a manner of increasing space between radiating elements according to an embodiment of the present invention;
FIG. 7 is a schematic structural diagram of another multi-frequency array antenna according to an embodiment of the present invention;
FIG. 8 is a schematic structural diagram of another multi-frequency array antenna according to an embodiment of the present invention;
FIG. 9 is a schematic structural diagram of another multi-frequency array antenna according to an embodiment of the present invention;
FIG. 10 is a schematic structural diagram of another multi-frequency array antenna according to an embodiment of the present invention;
FIG. 11 is a schematic structural diagram of another multi-frequency array antenna according to an embodiment of the present invention;
FIG. 12 is a schematic structural diagram of another multi-frequency array antenna according to an embodiment of the present invention; and
FIG. 13 is a schematic structural diagram of another multi-frequency array antenna according to an embodiment of the present invention.

### DESCRIPTION OF EMBODIMENTS

To make the objectives, technical solutions, and advantages of the present invention clearer, the following further describes the implementation manners of the present invention in detail with reference to the accompanying drawings.

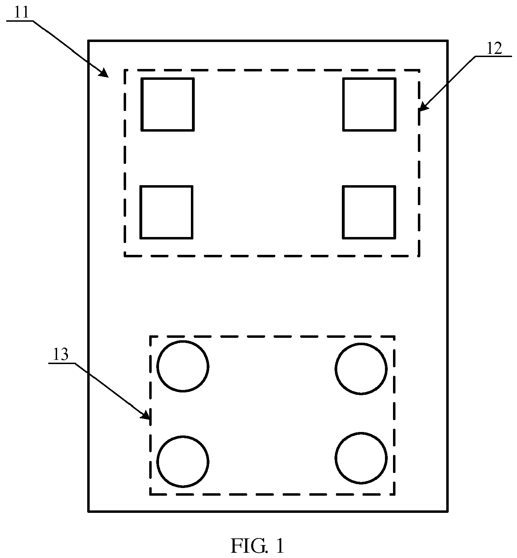

A size of a multi-frequency array antenna is generally determined by a size of a reflective plate, and the size of the reflective plate is determined by a size of a region occupied on the reflective plate by all radiating elements in the multi-frequency array antenna. As shown in FIG. 1, FIG. 1 is a schematic structural diagram of a conventional multi-frequency array antenna. The multi-frequency array antenna includes an air substrate (the air substrate is a dielectric substrate constituted by an air layer, with a dielectric constant being 1), a reflective plate 11, a microstrip antenna 12 whose operating frequency band is a 2.4 gigahertz (English: gigahertz; symbol: GHz) frequency band, and a microstrip antenna 13 whose operating frequency band is a 5 GHz frequency band. The two microstrip antennas each include four respective radiating elements and a respective feed network. A plurality of radiating elements on the reflective plate 11 may be mounted above the reflective plate 11 by using an insulation support. The air substrate is between the plurality of radiating elements and the reflective plate 11. The four radiating elements of the microstrip antenna 12 and the four radiating elements of the microstrip antenna 13 are independently arranged on the reflective plate 11. It can be seen from FIG. 1 that the four radiating elements of the microstrip antenna 12 and the four radiating elements of the microstrip antenna 13 occupy a large region on the reflective plate 11. As a result, a size of the reflective plate 11 is large, and therefore a size of the multi-frequency array antenna is large. The microstrip antenna (English: microstrip antenna) is an antenna that is formed by mounting the radiating elements on a side of the dielectric substrate and disposing the reflective plate on the other side of the dielectric substrate. The microstrip antenna requires formation of an open circuit between the radiating elements and the reflective plate, so as to generate an electromagnetic wave on the open circuit. The dielectric substrate is configured to form an open circuit between the radiating elements and the reflective plate. The reflective plate is a conductor ground plate. The radiating elements of the microstrip antenna may cooperate with the reflective plate to generate the electromagnetic wave. The radiating elements are basic structural units of the microstrip antenna, and can effectively radiate or receive electromagnetic waves. The feed network is a line network constituted by antenna feed lines (English: antenna feed line) of the plurality of radiating elements. The operating frequency band is a frequency range within which the microstrip antenna operates. The microstrip antenna can mutually communicate with another device only when operating within the frequency range.

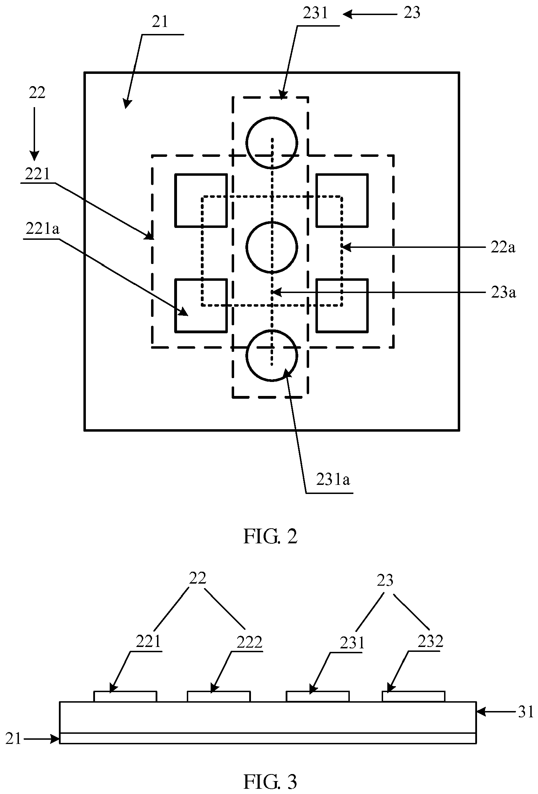

FIG. 2 is a schematic structural diagram of a multi-frequency array antenna according to an embodiment of the present invention. The multi-frequency array antenna may include:
a reflective plate 21 and at least two microstrip antennas having different operating frequency bands. Each of the at least two microstrip antennas includes a respective feed network (not shown in FIG. 2) and a respective radiating element set. The at least two microstrip antennas may include a first microstrip antenna 22 and a second microstrip antenna 23. A first radiating element set 221 of the first microstrip antenna 22 includes a plurality of radiating elements 221a arranged in an array. A second radiating element set 231 of the second microstrip antenna 23 includes at least one radiating element 231a. The first radiating element set 221 and the second radiating element set 231 are located on a same side of the reflective plate 21.

There is an overlapping region between a graph 22a constituted on the reflective plate 21 by the plurality of radiating elements in the first radiating element set 221 of the first microstrip antenna 22 and a graph 23a constituted on the reflective plate 21 by the at least one radiating element in the second radiating element set 231 of the second microstrip antenna 23. When there is an overlapping region between the graph 22a and the graph 23a, an area of a region occupied on the reflective plate 21 by a plurality of radiating elements that are on the reflective plate 21 (including the plurality of radiating elements in the first radiating element set 221 and the at least one radiating element in the second radiating element set 231) is smaller than an area occupied by radiating elements in a conventional multi-frequency array antenna on a reflective plate. Therefore, a size of the reflective plate 21 in this embodiment of the present invention may be smaller, reducing a size of the multi-frequency array antenna. A graph constituted on the reflective plate by a plurality of radiating elements may refer to a graph surrounded by or formed by connecting disposition positions of the plurality of radiating elements on the reflective plate, and a graph constituted on the reflective plate by one radiating element may refer to a disposition position of the radiating element on the reflective plate. That is, the graph constituted on the reflective plate by one radiating element may be one point. In addition, the multi-frequency array antenna may further include a dielectric substrate. The dielectric substrate may be an air substrate, or a substrate with a dielectric constant greater than 1.

The multi-frequency array antenna in FIG. 2 includes two microstrip antennas. The graph 22a is a rectangle, and the graph 23a is a line segment. However, the quantity of microstrip antennas, the shape of the graph 22a, and the shape of the graph 23a are all examples. The quantity of microstrip antennas may alternatively be 3, 4, or more, and the graph 22a and the graph 23a may be in other shapes.

In conclusion, in the multi-frequency array antenna provided by this embodiment of the present invention, a graph constituted on a reflective plate by radiating elements in a first radiating element set is made to overlap a graph constituted on a reflective plate by a radiating element in a second radiating element set, reducing an area of a region occupied on the reflective plate by a plurality of radiating elements that are on the reflective plate. This reduces a size of the reflective plate, and resolves a problem that a size of a conventional multi-frequency array antenna is large, reducing the size of the multi-frequency array antenna.

Further, referring to FIG. 3, FIG. 3 shows a schematic structural diagram of another multi-frequency array antenna according to an embodiment of the present invention. In this multi-frequency array antenna, a component is added on the basis of the multi-frequency array antenna shown in FIG. 2, so that the multi-frequency array antenna provided by this embodiment of the present invention has better performance.

The multi-frequency array antenna further includes a dielectric substrate 31, and the dielectric substrate 31 is disposed between the respective radiating element sets (221 and 231) of the microstrip antennas of the at least two microstrip antennas and the reflective plate 21. The first microstrip antenna 22 further includes a first feed network 222, and the second microstrip antenna 23 further includes a second feed network 232.

This embodiment of the present invention may include content in the following three aspects.
1. There is an overlapping region between the graph constituted on the reflective plate 21 by the plurality of radiating elements in the first radiating element set 221 and the graph constituted on the reflective plate 21 by the radiating element in the second radiating element set 231. Therefore, a size of space between the radiating elements in the first radiating element set 221 may be insufficient to dispose the radiating element in the second radiating element set 231 (when a radiating element in the first radiating element set and a radiating element in the second radiating element set are disposed, a gap between the radiating elements cannot be excessively small, to avoid excessively large electromagnetic interference between the radiating elements). In this case, two solutions may be included.

First solution: A dielectric substrate with a dielectric constant greater than 1 is disposed, and a size of a radiating element in the first radiating element set is reduced.

A relationship between a size of a radiating element of a microstrip antenna and the dielectric constant of the dielectric substrate is a negative correlation. Therefore, increasing the dielectric constant of the dielectric substrate and reducing the size of the radiating element can increase a gap between radiating elements of the first microstrip antenna 22 when performance of the first microstrip antenna 22 is maintained, so that the radiating element of the second microstrip antenna 23 can be disposed between the radiating elements of the first microstrip antenna 22.

The gap between radiating elements refers to a minimum value among distances between point pairs formed by any points on respective edges of two radiating elements. A radiating element of the first microstrip antenna refers to a radiating element in the first radiating element set. A radiating element of the second microstrip antenna refers to a radiating element in the second radiating element set.

In this embodiment of the present invention, the size of the radiating element in the first radiating element set 221 may be reduced while a dielectric substrate 31 with a dielectric constant greater than 1 is disposed. If the dielectric constant of the dielectric substrate is far greater than 1, for example, greater than or equal to 2.8 or further greater than or equal to 4.2, the size of the radiating element in the first radiating element set 221 may be further reduced, to increase the gap between the radiating element in the first radiating element set 221 and the radiating element in the second radiating element set 231. An increase in the gap between the radiating elements can avoid electromagnetic interference between the radiating elements, and ensure desired nesting between the radiating element in the first radiating element set 221 and the radiating element in the second radiating element set 231.

In a conventional solution, utilizing a dielectric substrate with a dielectric constant greater than 1 to reduce a size of an antenna is used mainly to reduce the size of the antenna itself, rather than to expand a gap between radiating elements. For example, a microstrip antenna is also used in a mobile communications device. Because there is no nesting between two radiating element sets, a gap between radiating elements does not need to be increased.

For example, the dielectric substrate 31 may be a polytetrafluorethylene glass cloth dielectric plate of a model F4B with a dielectric constant being 2.8, or the dielectric substrate 31 may be an epoxy resin plate of a model FR4 with a dielectric constant being 4.2. Sizes of the radiating elements in the first radiating element set 221 are equal and less than a preset radiating element size of the first microstrip antenna. The preset radiating element size is a radiating element size obtained by means of calculation by using a parameter that is the dielectric constant of the dielectric substrate 31 being 1.

In addition, when a physical dielectric substrate is disposed between the first radiating element set and the reflective plate, the first radiating element set and the second radiating element set may be installed on the dielectric substrate. When a distance between radiating elements of a microstrip antenna is 0.75λ to 0.9λ, the microstrip antenna can obtain relatively high performance. λ is a wavelength corresponding to an operating frequency band of the microstrip antenna. The distance between radiating elements refers to a distance between centers of the radiating elements. If an operating frequency band of the first microstrip antenna is a 2.4 GHz frequency band, λ is about 120 millimeters (English: millimeter; symbol: mm) to 124 mm. By means of calculation according to λ = 120 mm, the distance between the radiating elements may be 108 mm at maximum.

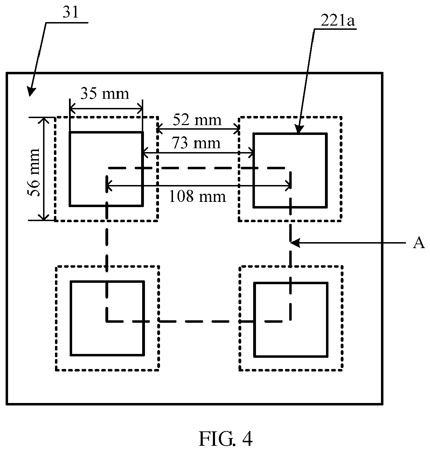

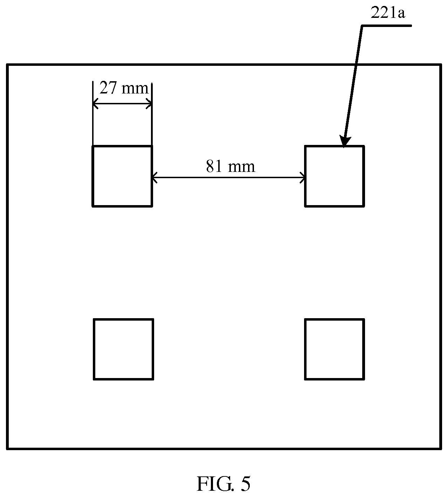

When the first radiating element set includes four radiating elements 221a, as shown in FIG. 4, a graph constituted on the reflective plate by the four radiating elements 221a in the first radiating element set may be a first square A. When a distance between neighboring radiating elements in the first radiating element set is 108 mm, the distance is a side length of the first square A. A shape of each radiating element 221a in the first radiating element set is a square, and a size of the radiating element 221a is a side length of the square. When the dielectric constant of the dielectric substrate 31 is 1, the preset radiating element size obtained by means of calculation is 56 mm. As shown in FIG. 4, when the size of the radiating element is 56 mm, a gap between two neighboring radiating elements is 108 mm - 56 mm = 52 mm. When the dielectric constant of the dielectric substrate 31 is 2.8, the size of the radiating element 221a may be set to 35 mm, and in this case, the gap between the two radiating elements 221a is increased to 73 mm. Alternatively, as shown in FIG. 5, when the dielectric constant of the dielectric substrate is 4.2, the size of the radiating element 221a may be reduced to 27 mm, and in this case, the gap between the two radiating elements 221a is increased to 81 mm. It can be obviously learned from FIG. 4 and FIG. 5 that after the dielectric constant is increased and the size of the radiating element is reduced, the space between the radiating elements of the first microstrip antenna 22 is effectively increased. In addition, after the dielectric constant of the dielectric substrate 31 is increased, the radiating element of the second microstrip antenna may also be smaller accordingly, so as to facilitate nesting of the radiating element of the second microstrip antenna into the radiating elements of the first microstrip antenna.

Each radiating element 221a in the first radiating element set may be in another shape, such as a rectangle, a circle, or a rhombus.

In the multi-frequency array antenna provided by this embodiment of the present invention, the operating frequency band of the first microstrip antenna may be the 2.4 GHz frequency band or a frequency band lower than 2.4 GHz, and an operating frequency band of the second microstrip antenna may be a 5 GHz frequency band. The 2.4 GHz frequency band and the 5 GHz frequency band are two commonly used operating frequency bands. A frequency range of the 2.4 GHz frequency band and a frequency range of the 5 GHz frequency band vary with the country or region, and are generally stipulated by a local authority or organization concerned.

Second solution: A distance between radiating elements of the first microstrip antenna is increased.

The graph constituted on the reflective plate by the plurality of radiating elements in the first radiating element set may be a regular polygon, for example, a regular triangle, a regular quadrilateral, or a regular pentagon. A distance between any two neighboring radiating elements in the first radiating element set may be greater than a preset arrangement distance. This increases the space between the radiating elements of the first microstrip antenna and facilitates nesting of the radiating element of the second microstrip antenna into the radiating elements of the first microstrip antenna. The preset arrangement distance is obtained by means of calculation according to a wavelength of the operating frequency band of the first microstrip antenna. A distance between two neighboring radiating elements may also refer to a distance between disposition positions of the two neighboring radiating elements on the reflective plate. The disposition positions may be positions of orthographic projections of centers of the radiating elements on the reflective plate.

When the distance between the radiating elements is 0.75λ to 0.9λ, the microstrip antenna can obtain relatively high performance. Therefore, 0.75λ to 0.9λ may be used as the preset arrangement distance between the radiating elements. If the distance between the radiating elements in the first radiating element set is further increased, the performance of the first microstrip antenna may be affected. However, using a structure of nesting the first microstrip antenna into the second microstrip antenna may reduce entire complexity of the multi-frequency array antenna, so that more multi-frequency array antennas can be deployed to compensate for performance loss of a single multi-frequency array antenna. Therefore, using a first microstrip antenna with a distance between radiating elements greater than the preset arrangement distance is acceptable. When a single multi-frequency array antenna is designed, performance of the first microstrip antenna may be considered, to avoid that an excessively large distance between radiating elements results in large impact on the performance of the first microstrip antenna.

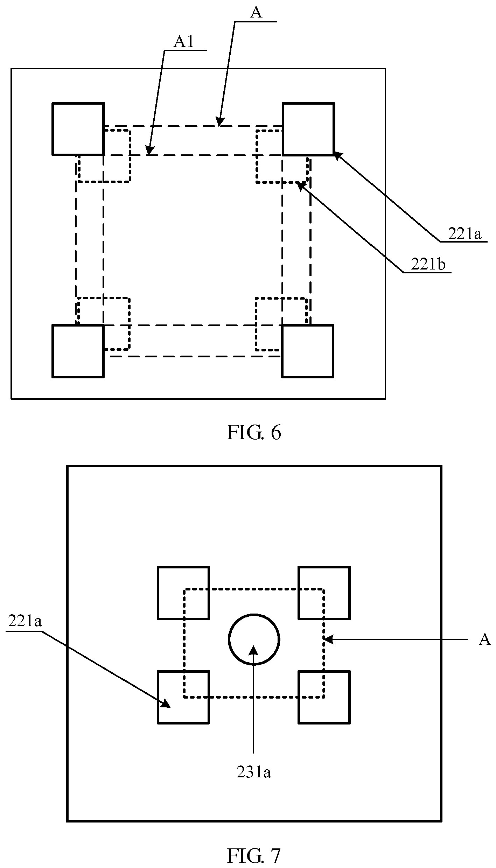

When the first radiating element set includes four radiating elements, as shown in FIG. 6, a graph constituted on the reflective plate by the four radiating elements 221a in the first radiating element set is a first square A. The preset arrangement distance may be 0.9λ. For example, if the operating frequency band of the first microstrip antenna is the 2.4 GHz frequency band, λ is about 120 mm to 124 mm. By means of calculation according to λ = 120 mm, the preset arrangement distance is 108 mm. Radiating elements 221b in FIG. 6 are arranged according to the preset arrangement distance. A graph constituted by the radiating elements 221b is a square A1. It can be seen that the square A1 is obviously smaller than the first square A.

In FIG. 6, a distance between any two radiating elements 221a is greater than 0.9λ. For example, the distance between any two radiating elements 221a may be set to 1.1λ, so that space between the four radiating elements in the first radiating element set can be significantly increased. In addition, a quantity of radiating elements in the first radiating element set may alternatively be 3, 5, 6, 7, or the like.

For example, the wavelength of the operating frequency band of the first microstrip antenna may be greater than a wavelength of the operating frequency band of the second microstrip antenna. For example, the operating frequency band of the first microstrip antenna is the 2.4 GHz frequency band, and the operating frequency band of the second microstrip antenna is the 5 GHz frequency band. Because a wavelength of an operating frequency band of a 2.4G antenna (a microstrip antenna whose operating frequency band is the 2.4 GHz frequency band) is greater than a wavelength of an operating frequency band of a 5G antenna (a microstrip antenna whose operating frequency band is the 5 GHz frequency band), a distance between radiating elements of the 2.4G antenna is generally greater than a distance between radiating elements of the 5G antenna. Therefore, increasing the distance between the radiating elements of the 2.4G antenna can make it easier to nest the radiating elements of the 5G antenna into the radiating elements of the 2.4G antenna.
2. In this embodiment of the present invention, according to a quantity of radiating elements in the first radiating element set and a quantity of radiating elements in the second radiating element set, an arrangement manner of the plurality of radiating elements in the two radiating element sets may be different. The following describes the arrangement manner of the radiating elements.

The second radiating element set may include n radiating elements, and n is an integer greater than 0 but less than 6. That is, the quantity of radiating elements in the second radiating element set may be 1, 2, 3, 4, or 5.

An operating frequency band of a microstrip antenna is negatively correlated with a wavelength of the operating frequency band, and the wavelength of the operating frequency band is positively correlated with a distance between radiating elements. Therefore, if the wavelength of the operating frequency band of the first microstrip antenna is greater than a wavelength of the operating frequency band of the second microstrip antenna (that is, the operating frequency band of the first microstrip antenna is lower than the operating frequency band of the second microstrip antenna), a graph constituted on the reflective plate by the n radiating elements may be within the graph constituted on the reflective plate by the plurality of radiating elements in the first radiating element set. That is, the graph constituted on the reflective plate by the n radiating elements falls completely within the graph constituted on the reflective plate by the plurality of radiating elements, without exceeding the graph constituted on the reflective plate by the plurality of radiating elements in the first radiating element set. For example, the graph constituted on the reflective plate by the n radiating elements in the second radiating element set is referred to as a first graph, and the graph constituted on the reflective plate by the plurality of radiating elements in the first radiating element set is referred to as a second graph. If the first graph is a point and the second graph is a line segment, the point is on the line segment. If the first graph is a square and the second graph is also a square, the first graph is within a region occupied by the second graph.

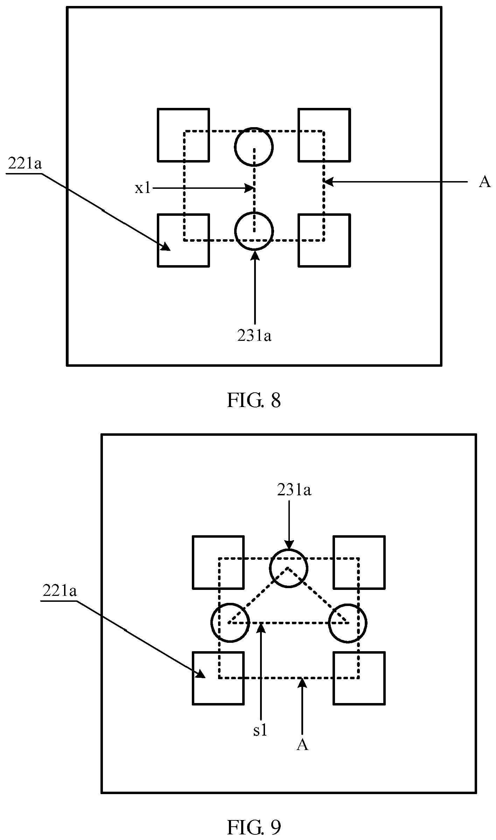

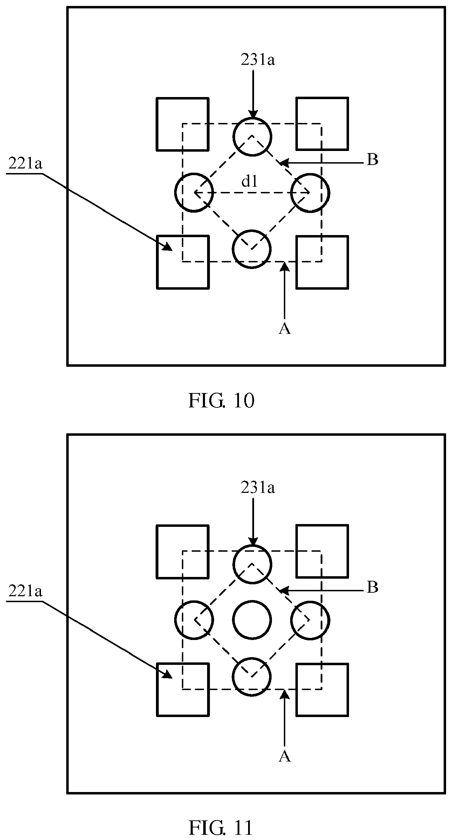

In this embodiment of the present invention, it is assumed that the quantity of radiating elements in the first radiating element set is 4.
1) When n=1, an arrangement manner of the plurality of radiating elements on the reflective plate may be shown in FIG. 7. A graph constituted by the four radiating elements 221a in the first radiating element set is a first square A. A disposition position of the radiating element 231a in the second radiating element set is within the first square A. Optionally, the disposition position of the radiating element 231a in the second radiating element set is a center of the first square A.
2) When n=2, an arrangement manner of the plurality of radiating elements on the reflective plate may be shown in FIG. 8. A graph constituted by the four radiating elements 221a in the first radiating element set is a first square A. Disposition positions of the two radiating elements 231a in the second radiating element set constitute a line segment x1 in the first square A. The line segment x1 is within a region surrounded by four sides of the first square A. Optionally, the line segment x1 is parallel to a side of the first square A.
3) When n=3, an arrangement manner of the plurality of radiating elements on the reflective plate may be shown in FIG. 9. A graph constituted by the four radiating elements 221a in the first radiating element set is a first square A. Disposition positions of the three radiating elements 231a in the second radiating element set constitute a triangle s1 in the first square A. The triangle s1 is within a region surrounded by four sides of the first square A.
4) When n=4, an arrangement manner of the plurality of radiating elements on the reflective plate may be shown in FIG. 10. A graph constituted by the four radiating elements 221a in the first radiating element set is a first square A. A graph constituted on the reflective plate by the four radiating elements 231a in the second radiating element set is a second square B. The second square B is within a region surrounded by four sides of the first square A. A center of the first square A and a center of the second square B are a same point, and a diagonal line d1 of the second square B is perpendicular to a side of the first square A. When both the first microstrip antenna and the second microstrip antenna include four radiating elements, nesting the radiating elements of the two microstrip antennas together in such an arrangement manner can reduce the size of the entire multi-frequency array antenna to a large extent. In a conventional multi-frequency array antenna, generally, radiating elements of two microstrip antennas are independently arranged. As a result, a large region is occupied, and a size of the multi-frequency array antenna is large.
5) When n=5, an arrangement manner of the plurality of radiating elements on the reflective plate may be shown in FIG. 11. This arrangement manner is constituted by further adding one radiating element 231a in the second square B on the basis of the arrangement manner shown in FIG. 10. For meanings of reference numerals in FIG. 11, refer to FIG. 10.

When the quantity of radiating elements in the first radiating element set is another value, for an arrangement manner of radiating elements on the multi-frequency array antenna, refer to FIG. 7 to FIG. 11. For example, on the basis of the first radiating element set shown in FIG. 10, a radiating element may be added or removed.

For ease of differentiation, in the accompanying drawings of this embodiment of the present invention, the radiating element 231a in the second microstrip antenna is disposed into a circle, but the radiating element 231a in the second microstrip antenna may alternatively be in another shape, such as a square, a rectangle, or a rhombus. In addition, for ease of description, a feed network is not shown in FIG. 4 to FIG. 11.
3. In this embodiment of the present invention, there is an overlapping region between the graph constituted on the reflective plate by the radiating elements in the first radiating element set and the graph constituted on the reflective plate by the radiating element in the second radiating element set. Therefore, the radiating elements in the first radiating element set may be close to the radiating element in the second radiating element set. As a result, the first feed network of the first microstrip antenna is excessively close to the second feed network of the second microstrip antenna. If the first feed network and the second feed network are located on a same side of the reflective plate, the first feed network and the second feed network may generate mutual electromagnetic interference. Therefore, disposing the first feed network and the second feed network on the same side of the reflective plate has a high requirement for cabling of the feed networks.

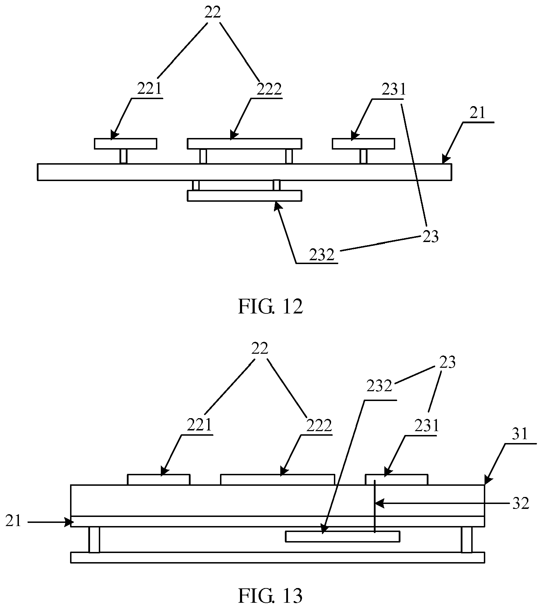

To avoid the foregoing problem, as shown in FIG. 12, the first feed network 222 of the first microstrip antenna and the second feed network 232 of the second microstrip antenna may be located on different sides of the reflective plate 21. That is, a feed network and a radiating element set of one of the first microstrip antenna and the second microstrip antenna are disposed on a same side of the reflective plate, and a feed network and a radiating element set of the other one are separately disposed on two sides of the reflective plate. The two feed networks are separated by the reflective plate. This avoids electromagnetic interference between the feed networks of the two microstrip antennas having different operating frequency bands. The second feed network 232 is not in direct contact with the reflective plate 21. For example, an insulation medium may be disposed between the second feed network 232 and the reflective plate 21.

FIG. 12 shows a scenario in which the first feed network 222 and the first radiating element set 221 of the first microstrip antenna 22 are located on a same side of the reflective plate 21, and the second feed network 232 and the second radiating element set 231 of the second microstrip antenna are located on different sides of the reflective plate 21. However, a structure of the first microstrip antenna and the second microstrip antenna in the multi-frequency array antenna provided by this embodiment of the present invention may be: The second feed network 232 and the second radiating element set 231 of the second microstrip antenna are located on a same side of the reflective plate 21, and the first feed network 222 and the first radiating element set 221 of the first microstrip antenna are located on different sides of the reflective plate 21.

In the first microstrip antenna and the second microstrip antenna, there is one microstrip antenna whose radiating element set and feed network are located on different sides of the reflective plate 21. Therefore, when the radiating element set and the feed network of this microstrip antenna are connected by using a line, the line may need to pass through the reflective plate. To avoid an electrical connection between the line and the reflective plate, in this embodiment of the present invention, the radiating element set that is not located on a side of the reflective plate as the feed network may be connected to the feed network by using a feed pin. The feed pin is a metal conductive bar with an insulation housing in a preset position. There is no electrical connection between the feed pin and the reflective plate.

FIG. 13 shows a scenario in which the dielectric substrate 31 is disposed on the reflective plate 21, the first feed network 222 and the first radiating element set 221 of the first microstrip antenna are located on a same side of the reflective plate 21, and the second feed network 232 and the second radiating element set 231 of the second microstrip antenna are located on different sides of the reflective plate 21. A feed pin 32 passes through the reflective plate 21 and the dielectric substrate 31 and connects the second feed network 232 to the second radiating element set 231. Each radiating element in the second radiating element set 231 may be separately connected to the second feed network 232 by using one feed pin. In addition, in the first microstrip antenna or the second microstrip antenna, a radiating element set that is located on a same side of the reflective plate as a feed network may be directly connected to the feed network. That is, in FIG. 13, the first feed network 222 and the first radiating element set 221 of the first microstrip antenna may be directly connected.

In conclusion, in the multi-frequency array antenna provided by this embodiment of the present invention, a graph constituted on a reflective plate by radiating elements in a first radiating element set is made to overlap a graph constituted on a reflective plate by a radiating element in a second radiating element set, reducing an area of a region occupied on the reflective plate by a plurality of radiating elements that are on the reflective plate. This reduces a size of the reflective plate, and resolves a problem that a size of a conventional multi-frequency array antenna is large, reducing the size of the multi-frequency array antenna.

An embodiment of the present invention further provides a communications system. The communications system includes:
a base station (English: base station, BS for short), and any multi-frequency array antenna provided by FIG. 2 to FIG. 13. The base station receives a signal or sends a signal by using the multi-frequency array antenna. The multi-frequency array antenna may be disposed inside the base station, or may be connected outside the base station. The foregoing base station refers to a radio transceiver, for example, a cell site (English: cell site) in a cellular network, or a wireless access point (English: wireless access point, WAP for short) in a wireless local area network (English: wireless local area network, WLAN for short).

The foregoing descriptions are merely examples of embodiments of the present invention, but are not intended to limit the protection scope of the present invention. The protection scope of the present invention shall be subject to the protection scope of the claims.

## Claims

1. A multi-frequency array antenna, wherein the multi-frequency array antenna comprises:
a reflective plate and at least two microstrip antennas having different operating frequency bands, wherein
each of the at least two microstrip antennas comprises a respective feed network and a respective radiating element set, the at least two microstrip antennas comprise a first microstrip antenna and a second microstrip antenna, a first radiating element set of the first microstrip antenna comprises a plurality of radiating elements arranged in an array, and a second radiating element set of the second microstrip antenna comprises at least one radiating element;
the first radiating element set and the second radiating element set are located on a same side of the reflective plate; and
there is an overlapping region between a graph constituted on the reflective plate by the plurality of radiating elements in the first radiating element set and a graph constituted on the reflective plate by the at least one radiating element in the second radiating element set.

2. The multi-frequency array antenna according to claim 1, wherein the multi-frequency array antenna further comprises a dielectric substrate, and the dielectric substrate is disposed between the respective radiating element set of each of the at least two microstrip antennas and the reflective plate, wherein
a dielectric constant of the dielectric substrate is greater than 1; and
sizes of the radiating elements in the first radiating element set are equal and less than a preset radiating element size of the first microstrip antenna, wherein the preset radiating element size is a radiating element size obtained by means of calculation by using a parameter that is the dielectric constant of the dielectric substrate being 1.

3. The multi-frequency array antenna according to claim 2, wherein
the first radiating element set comprises four radiating elements, a graph constituted on the reflective plate by the four radiating elements in the first radiating element set is a first square, a shape of each radiating element in the first radiating element set is a square, a size of the radiating element is a side length of the square, and the preset radiating element size is 56 millimeters.

4. The multi-frequency array antenna according to any one of claims 1 to 3, wherein
the graph constituted on the reflective plate by the plurality of radiating elements in the first radiating element set is a regular polygon, a distance between any two neighboring radiating elements in the first radiating element set is greater than a preset arrangement distance, and the preset arrangement distance is obtained by means of calculation according to a wavelength of an operating frequency band of the first microstrip antenna.

5. The multi-frequency array antenna according to claim 4, wherein
the first radiating element set comprises four radiating elements, a graph constituted on the reflective plate by the four radiating elements in the first radiating element set is a first square, the preset arrangement distance is 0.9λ, and λ is the wavelength of the operating frequency band of the first microstrip antenna.

6. The multi-frequency array antenna according to any one of claims 1 to 5, wherein
the second radiating element set comprises n radiating elements, n is an integer greater than 0, and a graph constituted on the reflective plate by the n radiating elements is within the graph constituted on the reflective plate by the plurality of radiating elements in the first radiating element set.

7. The multi-frequency array antenna according to any one of claims 1 to 6, wherein the first radiating element set comprises four radiating elements, a graph constituted on the reflective plate by the four radiating elements in the first radiating element set is a first square, the second radiating element set comprises four radiating elements, and a graph constituted on the reflective plate by the four radiating elements in the second radiating element set is a second square; and
a center of the first square and a center of the second square are a same point, a diagonal line of the second square is perpendicular to a side of the first square, and the second square is within the first square.

8. The multi-frequency array antenna according to any one of claims 1 to 7, wherein a first feed network of the first microstrip antenna and a second feed network of the second microstrip antenna are located on different sides of the reflective plate.

9. The multi-frequency array antenna according to any one of claims 1 to 8, wherein in the first microstrip antenna or the second microstrip antenna, a radiating element set that is located on a side of the reflective plate different from a corresponding feed network is connected to the feed network by using a feed pin.

10. A communications system, wherein the communications system comprises:
a base station, and the multi-frequency array antenna according to any one of claims 1 to 9, wherein the base station receives a signal or sends a signal by using the multi-frequency array antenna.
